# EUROPEAN PATENT SPECIFICATION

(11) **EP 4 506 155 B1**
(45) Date of publication and mention of the grant of the patent: **29.10.2025**
(21) Application number: 23189966.7
(22) Date of filing: 07.08.2023
(51) Int. Cl.: B32B 5/02, B32B 5/08, B32B 5/26, D04H 1/4382, D04H 3/11, D04H 3/016, D04H 3/147, A01G 9/02, A01G 9/033, A01G 25/00

(54) **NONWOVEN COMPOSITE FABRIC**
VERBUNDVLIESSTOFF
TISSU COMPOSITE NON TISSÉ

(43) Date of publication of application: 12.02.2025
(73) Proprietor: Carl Freudenberg KG, 69469 Weinheim (DE)
(72) Inventor: Abdelwahed, Boutheina, 63000 Colmar (FR); Khedimi, Achraf, 68000 Colmar (FR); Pieper, Frank, 66497 Contwig (DE)

(56) References cited:
- EP-A1- 3 424 700
- WO-A1-01/49914
- WO-A1-2004/009347
- US-A1- 2017 182 735
- "Advances in Unsaturated Soils", 28 January 2013, CRC PRESS, ISBN: 978-0-203-77107-5, article AZEVEDO M ET AL: "Capillary barrier dissipation by new wicking geotextile", pages: 559 - 565, XP055848824, DOI: 10.1201/b14393-88

## Description

The present invention relates to a nonwoven composite fabric having excellent water uptake and distribution properties combined with good mechanical properties. The present invention also relates to a method for manufacturing the nonwoven composite fabric, its use as capillary geotextile, specifically for moisture management and to a method to control the movement of water from a water source to a vegetative layer using the nonwoven composite fabric.

Geotextiles are textiles that are used in association with soil. Mostly, they are permeable to water. Usually, they are in the form of woven, non-woven or composite fabrics. Geotextiles can serve as building materials in civil engineering, water engineering and/or traffic route constructions. Applications are amongst others separation, drainage, filtering, reinforcement, protection, and erosion control.

An important application for geotextiles is their use as capillary substrate (capillary geotextiles). Capillary geotextiles can be used to pick up water from a water source such as a water reservoir, a rain collector or a water pipe and to distribute it over its surface (in plane). Capillary geotextiles are used in many fields where water distribution is important such as green roofing and vertical gardening. In green roofing and vertical gardening, the capillary geotextiles usually are positioned between a vegetative layer and a water source. By connecting the capillary geotextiles with the water source water can be transported to the geotextile, distributed therein and released to the vegetative layer.

Generally, capillary geotextiles should have a high capillarity in order to distribute the water efficiently and quickly. Capillary geotextiles should also have open pores that enable water to flow through. Therefore, they should not be too dense. On the other hand, capillary geotextiles should be able to retain particles and pollutants. Such filtration process helps to prevent clogging of the drainage system.

It is known that textile fabrics, such as nonwoven fabrics are well suited for capillary geotextiles. Nonwoven fabrics are materials made from fibers such as staple fibers (with a defined length) and/or filaments (theoretically continuous), bonded together by chemical, mechanical, heat and/or solvent treatment. The term is used in the textile manufacturing industry to denote textile fabrics, which are neither woven nor knitted. Nonwoven fabrics are described in ISO 9092:2019. Commercial capillary nonwoven geotextiles are needle-punched nonwovens based on macrofilament staple fibers. Disadvantageous of these products is that their water uptake and particularly water distribution capacity is relatively poor. Microfilaments containing nonwovens, although having better water uptake properties, seem not to be commercially used. The reason for this is presumably that they appear not suitable as capillary nonwoven geotextiles because their dense structure brings the risk of clogging and water accumulation.

US2017182735 (A1) describes a microfiber composite nonwoven, comprising:
a first fibrous component; and a second fibrous component,
wherein the first and second fibrous components are arranged in alternating plies, wherein at least one first ply A comprises the first fibrous component in the form of melt-spun composite filaments laid down to form a web, some or all of which have been split into elemental filaments having an average linear density of less than 0.1 dtex, and consolidated, wherein at least one ply B is arranged on the first ply A, wherein the ply B comprises the second fibrous component in the form of fibers having an average linear density of 0.1 to 3 dtex which have been laid down to form a web and consolidated, wherein at least one second ply A is arranged on the ply B. The proportion of the first fibrous component in the nonwoven is not less than 40 wt.% based on the overall weight of the nonwoven. Preferred uses are for linen, such as table linen, bed linen, in particular hospital and/or care home bed linen, sanitary linen, for example bathrobes, hand towels, patient gowns.

Azevedo, M. E. T. et al in Advances in Unsaturated Soils (2013), pages 559-565, discloses woven and nonwoven fabrics for use as capillary geotextiles.

The object underlying the present invention is to provide a textile fabric that can be used as capillary geotextile, specifically for moisture management. The textile fabric shall have a more rapid water uptake and better water distribution capacity as compared to the products used in the state of the art as capillary geotextiles, shall allow for a longer distance water transport while providing good mechanical properties even at low grammages.

This object is achieved by a nonwoven composite fabric comprising at least one layer A and at least one layer B, wherein at least one surface layer of the nonwoven composite fabric is formed by layer A, wherein layer A is a nonwoven fabric and wherein
a) layer A comprises first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex, wherein the amount of the first fibers is 10 wt.% to 35 wt.% based on the total weight of the nonwoven fabric;
b) layer B comprises
   b1) second fibers, preferably second filaments, with an average titer from 0.25 to 10 dtex, preferably 0.25 to 3.5 dtex, wherein the amount of the second fibers is 65 wt.% to 90 wt.% based on the total weight of the nonwoven fabric, or
   b2) a woven grid comprising yarns having an average titer from 500 dtex to 2200 dtex, preferably from 800 dtex to 2200 dtex, in particular from 1100 dtex to 2200 dtex, wherein the amount of the yarns is 20 wt.% to 90 wt.%, preferably 65 wt.% to 90 wt.% based on the total weight of the nonwoven fabric or
   b3) second fibers, preferably second filaments, with an average titer from 0.25 to 10 dtex and a woven grid comprising yarns having an average titer from 500 dtex to 2200 dtex, wherein the combined amount of the second fibers and of the yarns is 65 wt.% to 90 wt.% based on the total weight of the nonwoven fabric.

In practical experiments it was found that the non-woven composite fabric according to the invention has a more rapid water uptake, better water transportation, in particular better water distribution capacity as compared to the needle-punched products of the state of the art which do not contain microfibers. Specifically, the non-woven fabric according to the invention allows for a longer and more uniform distance water transport and also provides outstanding mechanical properties even at low grammages.

It is believed that the excellent water management capacities, in particular the high capillarity in plane, i.e. in X/Y-direction of the inventive non-woven fabric, are at least partly due to the presence of the microfibers of layer A which create an interconnected capillary network in the product. Through this network water can move in plane.

It is further believed that water uptake is synergistically improved by the presence of layer B which has fibers with a higher titer leading to a fiber titer gradient in Z-direction of the non-woven fabric.

Specifically, it was found that the amount of the first fibers should not be below 10 wt.% based on the total weight of the nonwoven fabric because otherwise the water uptake and particle filtration capacity will be not sufficient. On the other hand, for some applications it is advantageous that the amount of the first fibers is not higher than 35 wt.% based on the total weight of the nonwoven fabric because the presence of the first fibers increases density.

In addition, it was surprisingly found that despite the low pores of the microfiber layer there is no clogging. This allows drainage and specifically enables water to flow through the nonwoven while it can still retain particles and pollutants. Without wishing to be bound by theory it is believed that it is the presence of layer B which helps to prevent clogging because it has a more open pore structure than layer A.

Furthermore, it was found that the amount of the second fibers and/or the yarns plays an important role from preventing clogging. Specifically, for some applications it is advantageous that the amount of the second fibers is not below 65 wt.% and/or the amount of the yarn not below 20 wt.% based on the total weight of the nonwoven fabric in order to properly prevent clogging and to exploit the effect of a titer gradient. On the other hand, the amount of the second fibers and/or the yarns should not be higher than 90 wt.% based on the total weight of the nonwoven fabric because otherwise the amount of the microfibers would not be sufficient. In addition, the presence of the second fibers and/or the yarns improves the mechanical properties even at lower grammage.

As a consequence, the combined presence of fibers with a small titer and fibers/yarns with a higher titer within the nonwoven composite fabric allows for excellent water distribution and filtration properties whereas clogging can be avoided. It is believed that it is the presence of the second fibers and/or the yarns that helps clogging to be avoided. Furthermore, in combination with the first fibers they allow to provide the nonwoven composite fabric with a titer gradient, as explained more in detail below, which in turn is advantageous for the water uptake and capillarity properties of the nonwoven fabric.

According to the invention layer A is a nonwoven fabric, preferably a spunbond fabric, a needlpunched fabric, a spunlace fabric a wetlaid fabric, a knitted fabric. In a particularly preferred embodiment layer A is a spunbond fabric.

According to the invention, layer A comprises first fibers being first melt-spun composite fibers which are splitted to at least some extent to produce first elementary fibers having an average titer of at most 0.2 dtex. Preferably the average titer of the first elementary fibers ranges from 0.05 dtex to 0.2 dtex, more preferably from 0.08 dtex to 0.19 dtex, more preferably from 0.08 dtex to 0.15 dtex. Accordingly, the first fibers comprise fibers with a small titer. These small titer fibers are advantageous because, as explained above, they provide the nonwoven composite fabric with excellent capillarity in both directions i.e. in machine direction (MD) and in cross direction (CD), high water distribution capacity and controlled moisture management.

The term "fibers" is understood to comprise both, filaments and staple fibers. Preferably, the first fibers and the second fibers are filaments. Further preferably, the yarns comprise filaments. The term "filaments" is understood to mean fibers which, in contrast to staple fibers (i.e. fibers with a specific length), have a theoretically unlimited length. According to the invention, filaments are preferred fibers because they allow for a longer distance water transport and a more uniform water flow as staple fibers. Fibers can also be in the form of yarns. This is advantageous because it allows the use of recycled fabrics.

The term "yarn" is understood to be a continuous strand of staple and/or filament fibers arranged in a form suitable for weaving, knitting, or other form of fabric assembly. Preferably, the yarns comprise filaments. Structural integrity of the yarns can be obtained by adding a slight twist to the strand of fibers. Alternatively, structural integrity can be obtained by entanglement e.g. by an air jet. Preferred yarns comprise thermoplastic polymers, such as polyester, polyolefine and/or polyamide. Preferred polymers are polyester, in particular PET. Specifically the yarns consist of one or more of these polymers.

In a preferred embodiment of the invention the amount of the first fibers is 15 wt.% to 30 wt.%, more preferred 20 wt.% to 30 wt.%, based on the total weight of the nonwoven fabric.

In a further preferred embodiment of the invention b1) the amount of the second fibers is 70 wt.% to 85 wt.%, more preferably 70 wt.% to 80 wt.% based on the total weight of the nonwoven fabric.

In a further preferred embodiment of the invention b2) the amount of the yarns is 70 wt.% to 85 wt.% based on the total weight of the nonwoven fabric, more preferably 70 wt.% to 80 wt.%.

In a further preferred embodiment of the invention b3) the combined amount of the second fibers and of the yarns is 70 wt.% to 85 wt.%, more preferably 70 wt.% to 80 wt.% based on the total weight of the nonwoven fabric.

According to the invention at least one surface layer of the nonwoven composite fabric is formed by layer A. More preferably, both surface layers of the nonwoven composite fabric are formed by layers A. This allows the first fibers being present on the surface of the nonwoven composite fabric. This is advantageous because the small fiber titer of the first elementary fibers enhances capillarity, water transportation, in particular water distribution capacity and moisture management of the nonwoven composite fabric. These properties are particularly relevant at the surface of the nonwoven. Furthermore, the presence of layer A at the surface of the nonwoven composite fabric allows it to better trap contaminations such as dirt particles from the water than commercial products.

The first fibers are first melt-spun composite fibers which are splitted to at least some extent to produce first elementary fibers, preferably first elementary filaments, having an average titer of at most 0.2 dtex. Due to the small titer of the first elementary fibers the layer A can be considered as microfiber layer.

Composite fibers comprise at least two elementary fibers and can be splitted. Such splitting can be performed by customary splitting methods, such as fluid-jet bonding. Preferably, the first fibers are splitted by water-jets. Usually, simultaneously bonding of the elementary fibers takes place.

In a preferred embodiment of the invention the nonwoven composite fabric comprises at least one layer A and at least one layer B, wherein layer A is a nonwoven fabric, wherein
a) layer A comprises first fibers, preferably first filaments, being first melt-spun composite fibers which are splitted to at least some extent to produce first elementary fibers having an average titer of at most 0.2 dtex,
b) layer B comprises b1) second fibers, preferably second filaments, with an average titer from 0.25 to 10 dtex, preferably 0.25 to 3.5 dtex,
   - wherein at least one, preferably both surface layer(s) of the nonwoven composite fabric is/are formed by layer A and
   - wherein the amount of the first fibers is 10 wt.% to 35 wt.% based on the total weight of the nonwoven fabric and
   - wherein the amount of the second fibers is 65 wt.% to 90 wt.% based on the total weight of the nonwoven fabric.

Layer B comprises in option b1) second fibers, preferably second filaments, with an average titer from 0.25 to 10 dtex, preferably from 0.5 to 10 dtex, more preferably from 1 to 10 dtex, more preferably from 2 to 8 dtex, more preferably from 2.4 to 8 dtex, more preferably from 2.4 to 5 dtex, in particular from 2.4 to 3.5 dtex. The second fibers can be second melt-spun composite fibers and/or melt-spun monofibers each with an average titer from 0.25 to 10 dtex.

In option b1) Layer B can be a woven fabric, a nonwoven fabric, preferably a spunbond fabric, a needlpunched fabric, a spunlace fabric a wetlaid fabric, and/or a knitted fabric.

Preferably the second fibers are second melt-spun composite fibers which are splitted to at least some extent to produce second elementary fibers, preferably second elementary filaments. However, in case the second fibers are second composite fibers their splitting degree is preferably at most 10 %, such as 1 % to 10 %, more preferably at most 5 %. This is advantageous in order to keep the layer B open enough. Nevertheless, it is preferred that the second composite fibers are at least partially splitted. Preferably, the splitting degree of the second composite fibers is at least 1 %, such as 1 to 10 %, more preferably 1 to 5 %. This is advantageous because the presence of small fibers also in layer B improves the adhesion between layer A and layer B due to a better entanglement.

In a preferred embodiment, as well the first fibers as the second fibers are melt-spun composite fibers which are splitted to at least some extent to produce elementary fibers and the at least one layer A and the at least one layer B are joined to each other by hydroentanglement. In this embodiment, preferably, the splitting degree of the second composite fibers is 1 to 10 %, more preferably 1 to 5 %. Preferably, the splitting degree of the first composite fibers is at least 90 %, more preferably, at least 95 %, in particular at least 98 %. Preferably, the splitting degree of the second composite fibers is lower than the splitting degree of the first composite fibers. This can be achieved for example by adjusting the power of the water jets. Since at least one outer layer is formed by layer A, the first composite fibers are subjected to higher water jet pressure than layer B. Also, the power of the water jets can be adjusted so that one side of the nonwoven is subjected to higher water jet pressure than the other side.

The splitting degree of the fibers can be measured optically through a microscopic image (magnification 750) of the cross sectional cut of the nonwoven. Partially splitted fibers are considered as unsplitted fibers. At least 10 microscopic images shall be made and examined, and the average splitting degree shall be taken.

An advantage of using composite fibers as the starting material to produce the elementary fibers is that the titer of the elementary fibers produced therefrom can be easily adjusted by varying the number of the elementary fibers contained in the composite fibers. Here, the titer of the composite fibers can remain constant, which is advantageous from a procedural point of view. A further advantage of using the composite fibers is also that by varying the degree of splitting of the composite fibers, it is possible to easily control the ratio of relatively thick and relatively thin fibers in the microfiber composite fabric.

Preferably, the first fibers and optionally the second fibers are composite fibers which have been splitted, preferably by fluid jets, in particular water jets. Further preferably, at least one layer A and at least one layer B have been joined to each other by hydroentanglement whereby simultaneously the first fibers and optionally the second fibers have been splitted.

In a preferred embodiment the first fibers of layer A at least partially penetrate into the pores of the layer B and are at least partly intertwined with the second fibers and/or yarns of layer B ("tentacle effect"). This effect can be achieved, for example, by first forming a layer composite AB or also larger layer composites, for example a layer composite ABA, ABABA, etc., from layer(s) A and layer(s) B which are initially still unconsolidated or merely preconsolidated, and then carrying out a splitting or consolidation step for the entire layer composite.

In this procedure, the fibers of the first and/or second layer A can be distributed in the Z-direction, i.e., in the direction of the cross-section of the microfiber composite. This distribution may comprise several layers and leads to a particularly intensive bonding of the individual layers. Practical tests have shown that the finer fibers, the further they are transported into the other layers.

By splitting the first and optionally the second melt-spun composite fibers elementary fibers are formed. In this respect, the elementary fibers can be formed in the shape of a segment of a circle, or n-angled or multi-lobally in cross section.

The nonwoven composite fabric is preferably one in which the first composite fibers and optionally the second composite fibers have a cross section having a multisegmented structure like orange segments, also known as "pie", where the segments can contain different, alternating, incompatible polymers. Hollow pie structures are also suitable, which can also have an asymmetrically axially extending cavity. Pie structures, in particular hollow pie structures, can be split particularly easily. Hollow pie structures are also suitable, which can also have an asymmetrically axially extending cavity.

In this respect, the pie arrangement advantageously has 2, 4, 8, 16, 24, 32, 48 or 64 segments, particularly preferably 4, 8, 16, 24, 32 segments, in particular 4, 8, 16, 32 segments.

To achieve easy splitability, it is advantageous if the first composite fibers and optionally the second composite fibers contain at least two thermoplastic polymers. The composite fibers preferably comprise at least two incompatible polymers. The term "incompatible polymers" is understood to mean polymers which, when combined, produce non-adhering, partially or difficultly adhering pairings. A composite fiber of this type has good splitability into elementary fibers and produces a favorable ratio of strength to weight per unit area. Partially or difficultly adhering pairings are present when the composite fibers having these pairings split more easily than in the case of a composite fiber which consists of only one of the polymers used.

Polyolefins, polyesters, polyamides and/or polyurethanes are preferably used as incompatible polymer pairs in such a combination that non-adhering, partially or difficultly adhering pairs are produced.

The polymer pairs which are used are particularly preferably selected from polymer pairs having at least one first polyolefin, preferably polypropylene, and/or at least one polyamide, preferably polyamide 6, on the one hand, and at least one second polyolefin, preferably polypropylene or at least one polyester, preferably polyethylene terephthalate, on the other hand.

Polymer pairs having polypropylene, such as polypropylene/polyethylene, polypropylene/polyamide 6, and/or polypropylene/polyethylene terephthalate are particularly preferred.

Polymer pairs having at least one polyester, preferably polyethylene terephthalate and/or at least one polyamide, preferably polyamide 6, are also particularly preferred.

Polymer pairs having at least one polyamide and/or having at least one polyethylene terephthalate are preferably used due to their limited adhesiveness and polymer pairs having at least one polyolefin are particularly preferably used due to their poor adhesiveness.

The following have proven to be particularly expedient as particularly preferred components: polyesters, preferably polyethylene terephthalate, polylactic acid and/or polybutylene terephthalate, on the one hand, polyamide, preferably polyamide 6, polyamide 66, polyamide 46, on the other hand, optionally combined with one or more further polymers that are incompatible with the above-mentioned components, preferably selected from polyolefins. This combination has outstanding splitability. The combination of polyethylene terephthalate and polyamide 6 or of polyethylene terephthalate and polyamide 66 is very particularly preferred.

Options for producing microfilament layers of split composite fibers are known to a person skilled in the art and are described, for example, in EP 0814188 A1 and EP 1619283 A1.

According to a further embodiment of the invention the nonwoven composite fabric comprises at least one layer A and at least one layer B, wherein at least one surface layer of the nonwoven composite fabric is formed by layer A, wherein layer A is a nonwoven fabric, and wherein
a) layer A comprises first fibers, preferably first filaments, being first melt-spun composite fibers which are splitted to at least some extent to produce first elementary fibers having an average titer of at most 0.2 dtex, wherein the amount of the first fibers is 10 wt.% to 35 wt.% based on the total weight of the nonwoven fabric;
b) layer B comprises
   b2) a woven grid comprising yarns having an average titer from 500 dtex to 2200 dtex, wherein the amount of the yarns is 20 wt.% to 90 wt.%, preferably 65 wt.% to 90 wt.% based on the total weight of the nonwoven fabric.

For this embodiment, preferably the amount of the yarns is 30 wt. % to 60 wt. %, or40 wt. % to 70 wt. %, or 70 wt.% to 85 wt.%, in particular 70 wt.% to 80 wt.% based on the total weight of the nonwoven fabric.

It is also possible that layer B comprises as well second fibers, preferably second filaments, with an average titer from 0.25 to 10 dtex, preferably 0.25 to 3,5 dtex, and a woven grid comprising yarns having an average titer from 500 dtex to 2200 dtex. In this case the combined amount of the second fibers and of the yarns is 65 wt.% to 90 wt.% based on the total weight of the nonwoven fabric.

According to the invention, at least one, preferably both surface layer(s) of the nonwoven composite fabric is formed by layer A. This allows for the average titer of the fibers on at least one surface layer being smaller than the average titer in at least one inner layer because layer A comprises elementary fibers having an average titer of at most than 0.2 dtex, whereas layer B comprises fibers with a higher titer.

According to a preferred embodiment of the invention the nonwoven composite fabric has at least one fiber titer gradient along the Z- direction. Z-direction means across the thickness of the fabric. Fiber titer gradient means that the titer of the fibers in the nonwoven composite fabric increases and/or decreases along a specific direction, here the Z-direction. The increase and/or decrease may be continuous and/or discontinuous. For example, in a discontinuous increase or decrease the titer of the fibers may remain equal within some parts of the composite fabric but increase or decrease in other parts.

Further, in a preferred embodiment the fiber titer increases, preferably discontinuously, from at least one main side of the nonwoven composite fabric to its center.

Preferably, the gradient i.e. the decrease and/or increase of the fiber titer is discontinuous. In one embodiment such discontinuos fiber titer gradient can be achieved by a layered structure of the nonwoven composite fabric. Accordingly, in one embodiment the nonwoven has a layered structure. It has to be noted that also in a layered structure the fibers of the different structure are preferably intermingled at least at the interface. Such interminglement can be achieved by hydroentanglement of the nonwoven composite fabric. A layered structure can be identified optically because if a layered structure is present, it can be seen that there are two different layers A and B in the nonvowen. Since the mean fiber titers are different in layer A and layer B such layered structure leads to a fiber titer gradient.

The nonwoven composite fabric can also have more than one fiber titer gradient within its structure. E.g. the fiber titer may decrease in the direction from at least one main side of the nonwoven composite fabric to its center in some parts of the nonwoven but increase in the direction from at least one main side of the nonwoven composite fabric to its center in other parts.

According to a further preferred embodiment of the invention the nonwoven composite fabric has a porosity gradient along the z direction. Z-direction means across the thickness of the fabric. Porosity gradient means that the porosity of the nonwoven composite fabric increases and/or decreases along a specific direction here the Z-direction. The increase and/or decrease may be continuous and/or discontinuous. For example, in a discontinuous increase or decrease the porosity of the fibers may remain equal within some parts of the composite fabric but increase or decrease in other parts.

Further, preferably, the porosity increases from at least one main side of the nonwoven composite fabric to its center.

Preferably, the gradient i.e. the decrease and/or increase of the porosity is discontinuous. In one embodiment such discontinuous porosity gradient can be achieved by a layered structure of the nonwoven composite fabric. If the porosity is different in layer A and layer B such layered structure may lead to a porosity gradient.

The nonwoven composite fabric can also have more than one porosity gradient within its structure. E.g. the porosity may decrease in the direction from at least one main side of the nonwoven composite fabric to its center in some parts of the nonwoven but increase in the direction from at least one main side of the nonwoven composite fabric to its center in other parts.

In a preferred embodiment the nonwoven composite fabric has a vertical capillarity in seconds measured based on standard AATCC 197 as explained in the section measurement methods of less than 20 seconds, more preferably from 4 seconds to 12 seconds, each in at least one direction MD and/or CD, preferably in both directions. Also preferably, it has a vertical capillarity at least in MD direction of less than 20 seconds.

In a further preferred embodiment the nonwoven composite fabric has a horizontal capillarity after 4 hours measured as explained in the section measurement methods of at least 5 cm, preferably at least 8 cm, in particular at least 10 cm, each in at least one direction MD and/or CD, preferably in both directions.

In a further preferred embodiment of the invention the composite nonwoven has a thickness measured according to DIN EN ISO 9073-2:1997-02 from 0.3 mm to 3 mm, preferably from 0.5 mm to 2 mm.

In a further preferred embodiment of the invention the layer B has a thickness measured according to DIN EN ISO 9073-2:1997-02 from 0.1 mm to 2 mm, preferably from 0.1 mm to 1 mm.

In a further preferred embodiment of the invention layer A has a thickness measured according to DIN EN ISO 9073-2:1997-02 from 0.05 mm to 1 mm, preferably, from 0.05 mm to 0.5 mm.

In a further preferred embodiment of the invention the composite nonwoven has a weight per unit area measured according to ISO 9073-1:1989-07 from 50 g/m² to 1000 g/m², preferably from 100 g/m² to 400 g/m².

In a further preferred embodiment of the invention layer A has a weight per unit area measured according to ISO 9073-1:1989-07 from 10 g/m² to 300 g/m², preferably from 10 g/m² to 200 g/m².

In a further preferred embodiment of the invention the nonwoven composite fabric has a mechanical stability (tensile strength), measured in N/5cm according to DIN EN ISO 13934-1 - 2013-08 from 100 N/5cm to 2000 N/cm, preferably from 300 N/5cm to 1500 N/5cm, each in at least one direction MD or CD, preferably in both directions.

In a further preferred embodiment of the invention the splitting degree of the first fibers is at least 90%, more preferably, at least 95%, in particular at least 98%. This embodiment is advantageous because hereby capillarity, water transportation, in particular water distribution capacity and controlled moisture management is high. It is further preferred that the content of elementary fibers of layer A is from 90 wt.% to 100 wt.%, more preferably from 95 wt.% to 100 wt.%, in particular from 98 wt.% to 100 wt.%, based on a total weight of layer A.

In a preferred embodiment the content of elementary fibers of layer B is below 10 wt.%, preferably from 1 to 10 wt.%, more preferably from 1 wt.% to 5 wt.%, based on a total weight of layer B.

As mentioned above, it is preferred that at least one layer A and at least one layer B are joined to each other by entanglement, preferably by hydroentanglement. This is advantageous because it stabilizes the nonwoven composite fabric.

In a simple embodiment of the invention, the nonwoven composite fabric consists only of layer A and layer B. However, to optimize the properties, it can be advantageous that layers A and B are integrated in a multi-layered material. Accordingly, in a preferred embodiment the nonwoven composite fabric comprises more than one layer A and/or more than one layer B and/or further layers which are different from layer A or B. Further layers which are different from layer A or B can be selected from nonwovens, such as spunbond, needle-punched, spunlace, and wetlaid nonwovens, wovens, such as microfiber based wovens or not microfiber based wovens, knitted fabrics such as microfiber based knitted fabrics or not microfiber based knitted fabrics.

As explained above, in a particularly preferred embodiment the nonwoven composite fabric comprises at least one further layer A. What is said herein in relation to layer A shall also apply to further layer A. In a nonwoven composite fabric comprising as well at least one layer A as at least one further layer A the structure of both layers A can be chosen independently from another. Preferably, further layer A is positioned on that side of layer B facing away from layer A. Further preferred both surface layers of the nonwoven composite fabric are formed by layer A. Accordingly, a preferred structure is ABA.

In a further preferred embodiment the nonwoven composite fabric has through-pores. They can be formed by water jets and facilitate water permeability.

In a preferred embodiment the nonwoven composite fabric is produced by a method comprising
A) providing at least one layer A comprising first fibers, preferably first filaments, being first melt-spun composite fibers which are splittable to at least some extent to produce first elementary fibers having an average titer of at most 0.2 dtex wherein the amount of the first fibers is 10 wt.% to 35 wt.% based on the total weight of the nonwoven fabric;
B) providing at least one layer B comprising
   B1) second fibers, preferably second filaments, with an average titer from 0.25 to 10 dtex, preferably 0.25 to 3.5 dtex, wherein the amount of the second fibers is 65 wt.% to 90 wt.% based on the total weight of the nonwoven fabric; or
   B2) a woven grid comprising yarns, preferably filaments having an average titer from 500 dtex to 2200 dtex; wherein the amount of the yarns is 20 wt.% to 90 wt.%, preferably 65 wt.% to 90 wt.% based on the total weight of the nonwoven fabric; or
   B3) second fibers, preferably second filaments, with an average titer from 0.25 to 10 dtex and a woven grid comprising yarns, preferably filaments having an average titer from 500 dtex to 2200 dtex, wherein the combined amount of the second fibers and of the yarns is 65 wt.% to 90 wt.% based on the total weight of the nonwoven fabric;
C) positioning layers A and B one on top of the other, thereby forming at least one, preferably both, surface layer(s) by the layer A;
D) treating layers A and B with jets of fluid, preferably water jets, whereby at least the first fibers are entangled and splitted at least to some extent to produce elementary fibers having an average titer of at most 0.2 dtex whereby a nonwoven composite fabric is obtained.

In a preferred embodiment, in step D the layers A and B are joined to each other through the treatment with jets of fluid.

In a preferred embodiment the nonwoven composite fabric produced by the inventive process is a nonwoven composite fabric according to one or more of the embodiments described herein.

For example, in a preferred embodiment the nonwoven composite fabric produced by the inventive process is a nonwoven composite fabric wherein the second melt-spun fibers are melt-spun composite fibers with a splitting degree of 1 to 10 %.

In a particularly preferred embodiment the inventive nonwoven composite fabric is used as capillary geotextile, specifically for moisture management. Geotextiles are used in association with natural and/or artificial soil.

The present invention specifically relates to the use of the nonwoven composite fabric according to one or more of the embodiments described herein as capillary geotextile to control the movement of water, preferably from a water source to a vegetative layer. Preferably the use comprises to receive, to retain, to transport, to distribute and/or to drain water. Further preferably, the nonwoven composite fabric is used as part of an irrigation system, a green roofing system and/or a vertical garden system. In a specific embodiment the nonwoven composite fabric is used as capillary geotextile for moisture management in an irrigation system, a green roofing system and/or a vertical garden system.

For moisture management in an irrigation system the nonwoven composite fabric can be placed between and in water conducting connection with as well a vegetative layer as a water source. The fabric can function for example as sub-surface irrigation membrane that transports water to plant roots. Plants shall be understood in a broad way to encompass all living organisms that cannot move and carry out photosynthesis including fungi.

For moisture management in a green roofing system the nonwoven composite fabric can be placed above a water source and below the vegetative layer. The nonwoven composite fabric can help to retain moisture within and to irrigate the vegetative layer by allowing water to infiltrate and distribute evenly, promoting healthy plant growth. It can also act as a drainage or filtration layer, preventing soil erosion and clogging.

For moisture management in a vertical garden system the nonwoven composite fabric can be placed between the vegetative layer and a water source. The composite fabric can serve as a water retention, water distribution and/or drainage medium. The nonwoven composite fabric can help to regulate moisture levels, allowing plants to receive water while preventing excess water buildup and promoting healthy root growth.

The present invention further relates to a method to control the movement of water from a water source to a vegetative layer, comprising the following steps:
A') providing at least one water source,
B') positioning at least one nonwoven composite fabric according to one or more of the embodiments as described herein in such a way that transport of water from the water source through the nonwoven composite fabric to the vegetative layer is possible.

A vegetative layer is a layer of soil, intended to be planted and/or planted with plants. The soil can be natural and/or artificial such as stones and/or nutriment, optionally fixed on a carrier such as fibers. The vegetative layer can be the top layer in a green roof, the layer of a vertical garden system intended to be planted and/or planted with plants and/or the filling of a bag, e.g. formed by the nonwoven fabric according to the invention.

According to step A) at least one water source is provided. The at least one water source should be positioned in such a way that transport of water from the water source through the nonwoven composite fabric to the vegetative layer is possible. Water shall also include water vapour. The at least one water source is preferably positioned within, under and/or behind a vegetative layer. The positioning under a vegetative layer is performed preferably when the vegetative layer is horizontal such as in green roofing. When the vegetative layer is not horizontal such as in vertical gardening the water source is preferably positioned within and/or behind the vegetative layer. In case the water source is within the vegetative layer the water source can be integrated in the construction of the vertical gardening system. In case the water source is behind the vegetative layer, an advantage is that the water source can be hidden from view.

The water source can be any source of water such as a water reservoir, e.g. a tank, a rain collector, a water conducting perforated pipe and/or an impervious barrier or lining system which is able to collect water by preventing it from seeping into the surrounding soil.

According to step B) at least one nonwoven composite fabric according to one or more of the embodiments is provided. The nonwoven composite fabric should be positioned in such a way that transport of water from the water source through the nonwoven composite fabric to the vegetative layer is possible. In one embodiment the nonwoven composite fabric is positioned between the water source and the vegetative layer. Since the water from the water source is further distributed in its plane, i.e. in X/Y-direction of the nonwoven composite fabric, the vegetative layer can be efficiently irrigated. To allow transition of water from the nonwoven composite fabric to the vegetative layer both layers should be in water conducting connection. Preferably, both layers are directly adjacent to each other without any intermediate layer. However, intermediate layers are possible as long as they do not inhibit the water conducting connection.

In step B) the at least one nonwoven fabric is positioned in such a way that transport of water from the water source through the nonwoven composite fabric to the vegetative layer is possible. This may include optional step C) comprising making at least one water conducting connection between the water source and the nonwoven composite fabric in such a way that water from the water reservoir can be transported to the nonwoven composite fabric and can be distributed in its plane. "In plane" means the X/Y direction of the nonwoven fabric. The water can be distributed over the whole surface or only over parts of it. The water conducting connection can be made using the nonwoven composite fabric itself. E.g. the nonwoven composite fabric can be arranged in such a way that parts of it contact the water of the water source.

In a further embodiment the water conducting connection is performed by a further capillary medium, such as a textile fabric which is not a part of the inventive nonwoven composite fabric. The further capillary medium may be structurally the same or different from the inventive nonwoven composite fabric. A preferred further capillary medium is a nonvowen, in particular a nonwoven stripe. In order to make the water conducting connection the capillary medium preferably is contacted as well with the nonwoven composite fabric as with the water reservoir. In doing so the capillary effects can transport the water from the water source via the capillary medium to the nonwoven composite fabric.

Due to the high capillarity of the nonwoven composite fabric the water coming from the water source is distributed in its plane and can further spread into the vegetative layer. This allows to efficiently irrigate the vegetative layer.

In a preferred embodiment by the inventive method the movement of water in a green roofing system is controlled. For this purpose the nonwoven composite fabric can be positioned above at least one water source and within and/or under the vegetative layer. The nonwoven composite fabric and the water source should be positioned in such a way that transport of water from the water source through the nonwoven composite fabric to the vegetative layer is possible. The nonwoven composite fabric can help to retain moisture within and to irrigate the vegetative layer by allowing water to infiltrate and distribute evenly, promoting healthy plant growth. It can also act as a drainage or filtration layer, preventing soil erosion and clogging.

In a further preferred embodiment with the inventive method the movement of water in a vertical garden system is controlled. For this purpose, the nonwoven composite fabric can be placed within and/or behind the vegetative layer. Preferably, the nonwoven composite fabric is placed between and in water conducting connection with both the vegetative layer and the water source. The nonwoven composite fabric can also serve as a water retention and drainage medium. The nonwoven composite fabric can help to regulate moisture levels, allowing plants to receive water while preventing excess water buildup and promoting healthy root growth.

A further aspect of the invention relates to the use of a nonwoven composite fabric according to one or more embodiments described herein for erosion control. Preferably, the composite fabric is placed on the soil surface, such as in slopes, embarkments and/or riverbanks. Here it can reduce water velocity and encourage infiltration, preventing soil erosion. The nonwoven composite fabric can also act as a barrier, preventing soil particles from being washed away while allowing water to percolate through.

A further aspect of the invention relates to a cleaning cloth comprising a nonwoven composite fabric according to one or more embodiments described herein. It was found that particularly with layer B being a woven grid comprising yarns having an average titer from 500 dtex to 2200 dtex (b2) very good cleaning efficiency can be achieved. Specifically, it was found that the presence of the grid efficiently reduces friction. Another aspect relates to the use of a cleaning cloth comprising a nonwoven composite fabric according to one or more embodiments described herein for cleaning surfaces.

### Methods of measurement

### Vertical Capillarity

The vertical capillarity is measured based on standard AATCC 197 (Test Method for Vertical Wicking Rate of Textiles: to Specified Distances).

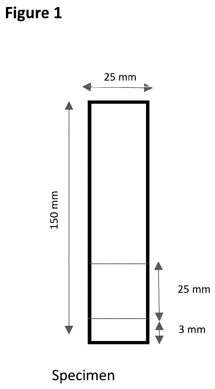

The following conditions are used:
- Composite nonwoven (inventive) sample dimension : 25 mm X 150 mm (see Fig. 1)
- 4 Samples in MD
- 4 Samples in CD
   >> distributed equally on nonwoven roll width.
- Each sample is marked with a felt-tip pen (see Fig. 1).

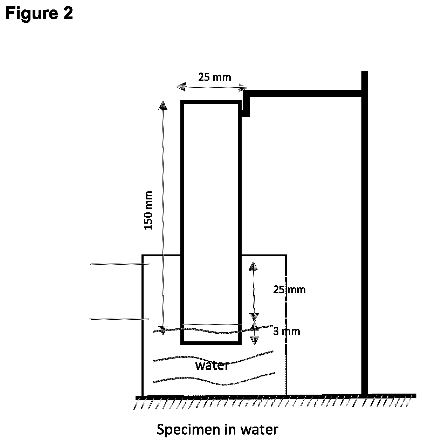

Procedure:
- The sample is placed in water (see Fig. 2).
- The chronometer is started when the water has reached the first mark of the sample (3 mm)
- The chronometer is stopped when the water has reached the second mark.
- The results are recorded in a table, then repeated for each sample.
- The average value of the 4 MD/4 CD samples is calculated.

### Horizontal Capillarity

The following conditions are used:
An inventive nonwoven (600 mm X 600 mm) is placed on a horizontal metal support. A water reservoir is positioned under the metal support without any direct contact to the inventive nonwoven. To make a water conducting contact between the inventive nonwoven and the water reservoir a connecting stripe (65 mm X 300 mm) is used. The connecting stripe is a water conducting nonwoven placed between the inventive nonwoven and the metal support. To allow the connecting stripe to penetrate the metal support it is provided with a slot.

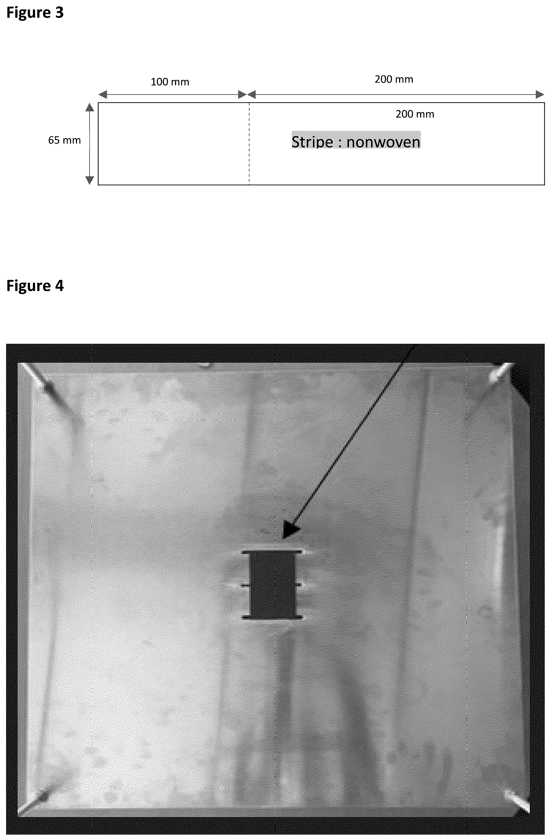

The stripe is pulled partly through the metal support so that from the stripe 65 mm X 100 mm are in contact with the inventive nonwoven (i.e. horizontally positioned under it) and 200 mm are hanging down vertically and are partially submerged in water from the water reservoir. The vertical part of the strip allows the water to rise. The rest of the strip (100 x 65 mm) being under and in contact with the inventive nonwoven allows the water to pass over to it. Figure 3 indicates the dimensions of the stripe. Fig. 4 shows a foto from the metal support provided with the strip (arrow) from above. To be able to detect the water distribution in the inventive nonwoven colored water is used (blue).
- The chronometer is started when the end of the vertical part of the stripe touches the water (the other end is in contact with the inventive nowoven).
- The water distribution is marked on the nonwoven every 15 minutes, up to one hour and then every hour up to 24 hours.
- The results are recorded in a table and the test is repeated for each sample.
- The MD and CD distances, measured starting from the end of the stripe are read off.

In the following the invention is further explained by non-limiting examples.

### Example 1 Preparation of an inventive composite nonwoven fabric

An inventive composite nonwoven fabric has been prepared with the following composition:
a) Two layers A are provided each comprising first filaments, being first melt-spun composite filaments. The amount of the first fibers (i.e. from layer A and the second layer A taken together) is 25 wt.% based on the total weight of the nonwoven fabric;
b) One layer B is provided comprising
   b1) second filaments being composite filaments, with an average titer of 2,5 dtex wherein the amount of the second fibers is 75 wt.% based on the total weight of the nonwoven fabric.

Layers A, B and the second layer A are positioned one on top of the other, thereby forming both surface layers by layers A and the middle layer by layer B.

The composite ABA is treated with jets of fluid, preferably water jets, whereby the first fibers are entangled and splitted to more than 90% to produce first elementary filaments having an average titer of 0.15 dtex and whereby the second fibers are entangled and splitted to less than 5 %. Further, the first fibers of layers A at least partially penetrate into the pores of the layer B and at least partly intertwine with the second fibers of layer B ("tentacle effect").

The resulting composite nonwoven has a thickness of 1 mm, a tensile strength (MD) of 574 N/5cm and a vertical capillarity of 6 seconds (MD) and of 5 seconds (CD).

### Example 2: Measurement of horizontal capillarity of the inventive nonwoven

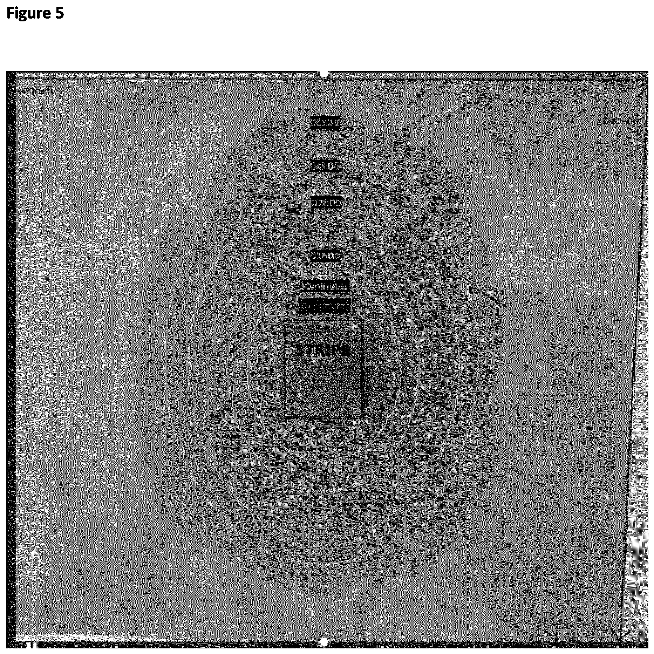

The horizontal capillarity of the inventive nonwoven is tested. The results are shown in Fig. 5. Here, those parts of the nonwoven reached by water have a darker color. The water distribution is measured in distance (MD/CD) starting from the end of the stripe and in correlation to the time to achieve that distance.

The observed water distribution was 17 cm in MD and 12 cm in CD after 4 hours.

In contrast, a commercial product being a needle-punched nonwoven based on macrofilament staple fibers (3 mm) had a water distribution less than 2 cm in MD and less than 1 cm in CD after 4 hours. Further it had a tensile strength (MD) of 400 N/5cm and a vertical capillarity of 675 seconds (MD) and of 9 seconds (CD).

## Claims

1. Nonwoven composite fabric comprising at least one layer A and at least one layer B, wherein at least one surface layer of the nonwoven composite fabric is formed by layer A, wherein layer A is a nonwoven fabric and wherein
a) layer A comprises first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex, wherein the amount of the first fibers is 10 wt.% to 35 wt.% based on the total weight of the nonwoven fabric;
b) layer B comprises
b1) second fibers, preferably second filaments, with an average titer from 0.25 to 10 dtex, preferably 0.25 to 3.5 dtex, wherein the amount of the second fibers is 65 wt.% to 90 wt.% based on the total weight of the nonwoven fabric, or
b2) a woven grid comprising yarns having an average titer from 500 dtex to 2200 dtex, preferably from 800 dtex to 2200 dtex, wherein the amount of the yarns is 20 wt.% to 90 wt.%, preferably 65 wt.% to 90 wt.% based on the total weight of the nonwoven fabric or
b3) second fibers, preferably second filaments, with an average titer from 0.25 to 10 dtex and a woven grid comprising yarns having an average titer from 500 dtex to 2200 dtex, wherein the combined amount of the second fibers and of the yarns is 65 wt.% to 90 wt.% based on the total weight of the nonwoven fabric.

2. Nonwoven composite fabric according to claim 1 wherein the amount of the first fibers is 15 wt.% to 30 wt.%, more preferred 20 wt.% to 30 wt.%, based on the total weight of the nonwoven fabric and/or the amount of the second fibers is 70 wt.% to 85 wt.%, more preferably 70 wt.% to 80 wt.% based on the total weight of the nonwoven fabric and/or the combined amount of the second fibers and of the yarns is 70 wt.% to 85 wt.%, more preferably 70 wt.% to 80 wt.% based on the total weight of the nonwoven fabric.

3. Nonwoven composite fabric according to claim 1 or 2 wherein both surface layers of the nonwoven composite fabric are formed by layers A.

4. Nonwoven composite fabric according to one or more of the preceding claims, wherein the second fibers, have an average titer from 0.5 to 10 dtex, more preferably from 1 to 10 dtex.

5. Nonwoven composite fabric according to one or more of the preceding claims, wherein the second fibers are second melt-spun composite fibers with a splitting degree of 1% to 10%.

6. Nonwoven composite fabric according to one or more of the preceding claims, wherein at least one layer A and at least one layer B are joined to each other by hydroentanglement.

7. Nonwoven composite fabric according to one or more of the preceding claims having a vertical capillarity in seconds measured based on standard AATCC 197 as explained in the section measurement methods of less than 20 seconds, more preferably from 4 seconds to 12 seconds and/or having a horizontal capillarity after 4 hours measured as explained in the section measurement methods of at least 5 cm, preferably at least 8 cm, in particular at least 10 cm, each in at least one direction MD and/or CD, preferably in both directions.

8. Nonwoven composite fabric according to one or more of the preceding claims having a thickness measured according to DIN EN ISO 9073-2:1997-02 from 0.3 mm to 3 mm, preferably from 0.5 mm to 2 mm.

9. Nonwoven composite fabric according to according to one or more of the preceding claims wherein the nonwoven composite fabric is produced by a method comprising
A) providing at least one layer A comprising first fibers, preferably first filaments, being first melt-spun composite fibers which are splittable to at least some extent to produce first elementary fibers having an average titer of at most 0.2 dtex wherein the amount of the first fibers is 10 wt.% to 35 wt.% based on the total weight of the nonwoven fabric, , wherein layer A is a nonwoven fabric;
B) providing at least one layer B comprising
B1) second fibers, preferably second filaments, with an average titer from 0.25 to 10 dtex, preferably 0.25 to 3,5 dtex, wherein the amount of the second fibers is 65 wt.% to 90 wt.% based on the total weight of the nonwoven fabric; or
B2) a woven grid comprising yarns, preferably filaments having an average titer from 500 dtex to 2200 dtex; wherein the amount of the yarns is 20 wt.% to 90 wt.%, preferably 65 wt.% to 90 wt.% based on the total weight of the nonwoven fabric; or
B3) second fibers, preferably second filaments, with an average titer from 0.25 to 10 dtex and a woven grid comprising yarns, preferably filaments having an average titer from 500 dtex to 2200 dtex, the combined amount of the second fibers and of the yarns is 65 wt.% to 90 wt.% based on the total weight of the nonwoven fabric;
C) positioning layers A and B one on top of the other, thereby forming at least one, preferably both, surface layer(s) by the layer A;
D) treating layers A and B with jets of fluid, preferably water jets, whereby at least the first fibers are entangled and splitted at least to some extent to produce elementary fibers having an average titer of at most 0.2 dtex whereby a nonwoven composite fabric is obtained.

10. Use of a nonwoven composite fabric according to one or more of the preceding claims as capillary geotextile to control the movement of water, preferably from a water source to a vegetative layer.

11. Use according to claim 10 wherein water is received, retained, transported distributed and/or to drained.

12. Use according to claim 10 or 11 wherein the nonwoven composite fabric is used as part of an irrigation system, a green roofing system and/or a vertical garden system.

13. Method to control the movement of water from a water source to a vegetative layer, comprising the following steps:
A') providing at least one water source,
B') positioning at least one nonwoven composite fabric according to one or more of the embodiments as described herein in such a way that transport of water from the water source through the nonwoven composite fabric to the vegetative layer is possible.

14. Method according to claim 13, further comprising step C') which includes making at least one water conducting connection between the water source and the nonwoven composite fabric by a further capillary medium.

15. Method according to claim 13 wherein movement of water in an irrigation system, a green roofing system and/or a vertical garden system is controlled.

## Patentansprüche

1. Vliesverbundstoff umfassend wenigstens eine Schicht A und wenigstens eine Schicht B, wobei wenigstens eine Oberflächenschicht des Vliesverbundstoffs von Schicht A gebildet wird, wobei Schicht A ein Vliesstoff ist und wobei
a) Schicht A erste Fasern umfasst, vorzugsweise erste Filamente, die erste schmelzgesponnene Verbundfasern, vorzugsweise erste schmelzgesponnene Verbundfilamente, sind, die wenigstens zu einem gewissen Maß aufgetrennt sind, um erste Elementarfasern, vorzugsweise erste Elementarfilamente, mit einem mittleren Titer von höchstens 0,2 dtex zu bilden, wobei die Menge der ersten Fasern 10 Gew.-% bis 35 Gew.-%, bezogen auf das Gesamtgewicht des Vliesstoffs, beträgt;
b) Schicht B umfasst
b1) zweite Fasern, vorzugsweise zweite Filamente, mit einem mittleren Titer von 0,25 bis 10 dtex, vorzugsweise 0,25 bis 3,5 dtex, wobei die Menge der zweiten Fasern 65 Gew.-% bis 90 Gew.-%, bezogen auf das Gesamtgewicht des Vliesstoffs, beträgt, oder
b2) ein Gittergewebe umfassend Garne mit einem mittleren Titer von 500 dtex bis 2200 dtex, vorzugsweise von 800 dtex bis 2200 dtex, wobei die Menge der Garne 20 Gew.-% bis 90 Gew.-%, vorzugsweise 65 Gew.-% bis 90 Gew.-%, bezogen auf das Gesamtgewicht des Vliesstoffs beträgt, oder
b3) zweite Fasern, vorzugsweise zweite Filamente, mit einem mittleren Titer von 0,25 bis 10 dtex, und ein Gittergewebe umfassend Garne mit einem mittleren Titer von 500 dtex bis 2200 dtex, wobei die kombinierte Menge der zweiten Fasern und der Garne 65 Gew.-% bis 90 Gew.-%, bezogen auf das Gesamtgewicht des Vliesstoffs, beträgt.

2. Vliesverbundstoff nach Anspruch 1, wobei die Menge der ersten Fasern 15 Gew.-% bis 30 Gew.-%, bevorzugter 20 Gew.-% bis 30 Gew.-%, bezogen auf das Gesamtgewicht des Vliesstoffs, beträgt und/oder die Menge der zweiten Fasern 70 Gew.-% bis 85 Gew.-%, bevorzugter 70 Gew.-% bis 80 Gew.-%, bezogen auf das Gesamtgewicht des Vliesstoffs, beträgt und/oder die kombinierte Menge der zweiten Fasern und der Garne 70 Gew.-% bis 85 Gew.-%, bevorzugter 70 Gew.-% bis 80 Gew.-%, bezogen auf das Gesamtgewicht des Vliesstoffs, beträgt.

3. Vliesverbundstoff nach Anspruch 1 oder 2, wobei beide Oberflächenschichten des Vliesverbundstoffs aus Schichten A gebildet sind.

4. Vliesverbundstoff nach einem oder mehreren der vorstehenden Ansprüche, wobei die zweiten Fasern einen mittleren Titer von 0,5 bis 10 dtex, bevorzugter von 1 bis 10 dtex, aufweisen.

5. Vliesverbundstoff nach einem oder mehreren der vorstehenden Ansprüche, wobei die zweiten Fasern zweite schmelzgesponnene Verbundfasern mit einem Auftrennungsgrad von 1 % bis 10 % sind.

6. Vliesverbundstoff nach einem oder mehreren der vorstehenden Ansprüche, wobei wenigstens eine Schicht A und wenigstens eine Schicht B durch Wasserstrahlverfestigung miteinander verbunden sind.

7. Vliesverbundstoff nach einem oder mehreren der vorstehenden Ansprüche mit einer vertikalen Kapillarität in Sekunden, gemessen nach dem Standard AATCC 197 wie in dem Abschnitt über Messverfahren erläutert, von weniger als 20 Sekunden, bevorzugter von 4 Sekunden bis 12 Sekunden, und/oder mit einer horizontalen Kapillarität nach 4 Stunden, gemessen wie in dem Abschnitt über Messverfahren erläutert, von wenigstens 5 cm, vorzugsweise wenigstens 8 cm, insbesondere wenigstens 10 cm, jeweils in wenigstens einer Richtung MD und/oder CD, vorzugsweise in beiden Richtungen.

8. Vliesverbundstoff nach einem oder mehreren der vorstehenden Ansprüche mit einer Dicke, gemessen nach DIN EN ISO 9073-2:1997-02, von 0,3 mm bis 3 mm, vorzugsweise von 0,5 mm bis 2 mm.

9. Vliesverbundstoff nach einem oder mehreren der vorstehenden Ansprüche, wobei der Vliesverbundstoff durch ein Verfahren hergestellt ist, das umfasst
A) Bereitstellen wenigstens einer Schicht A umfassend erste Fasern, vorzugsweise erste Filamente, die erste schmelzgesponnene Verbundfasern sind, die wenigstens zu einem bestimmten Ausmaß auftrennbar sind, um erste Elementarfasern mit einem mittleren Titer von höchstens 0,2 dtex zu bilden, wobei die Menge der ersten Fasern 10 Gew.-% bis 35 Gew.-%, bezogen auf das Gesamtgewicht des Vliesstoffs, beträgt, wobei Schicht A ein Vliesstoff ist;
B) Bereitstellen wenigstens einer Schicht B umfassend B1) zweite Fasern, vorzugsweise zweite Filamente, mit einem mittleren Titer von 0,25 bis 10 dtex, vorzugsweise 0,25 bis 3,5 dtex, wobei die Menge der zweiten Fasern 65 Gew.-% bis 90 Gew.-%, bezogen auf das Gesamtgewicht des Vliesstoffs, beträgt; oder
B2) ein Gittergewebe umfassend Garne, vorzugsweise Filamente, mit einem mittleren Titer von 500 dtex bis 2200 dtex, wobei die Menge der Garne 20 Gew.-% bis 90 Gew.-%, vorzugsweise 65 Gew.-% bis 90 Gew.-%, bezogen auf das Gesamtgewicht des Vliesstoffs, beträgt; oder
B3) zweite Fasern, vorzugsweise zweite Filamente, mit einem mittleren Titer von 0,25 bis 10 dtex, und ein Gittergewebe umfassend Garne, vorzugsweise Filamente, mit einem mittleren Titer von 500 dtex bis 2200 dtex, wobei die kombinierte Menge der zweiten Fasern und der Garne 65 Gew.-% bis 90 Gew.-%, bezogen auf das Gesamtgewicht des Vliesstoffs, beträgt;
C) Positionieren von Schichten A und B übereinander, wobei wenigstens eine, vorzugsweise beide, Oberflächenschicht(en) von der Schicht A gebildet werden;
D) Behandeln der Schichten A und B mit Fluidstrahlen, vorzugsweise Wasserstrahlen, wobei wenigstens die ersten Fasern verschlungen und wenigstens zu einem gewissen Ausmaß aufgetrennt werden, um Elementarfasern mit einem mittleren Titer von höchstens 0,2 dtex zu bilden, wodurch ein Vliesverbundstoff erhalten wird.

10. Verwendung eines Vliesverbundstoffs nach einem oder mehreren der vorstehenden Ansprüche als kapillares Geotextil zum Steuern der Bewegung von Wasser, vorzugsweise von einer Wasserquelle zu einer vegetativen Schicht.

11. Verwendung nach Anspruch 10, wobei Wasser aufgenommen, zurückgehalten, befördert, verteilt und/oder abgeführt wird.

12. Verwendung nach Anspruch 10 oder 11, wobei der Vliesverbundstoff als Teil eines Bewässerungssystems, eines Dachbegrünungssystems und/oder eines vertikalen Gartensystems verwendet wird.

13. Verfahren zum Steuern der Bewegung von Wasser von einer Wasserquelle zu einer vegetativen Schicht, umfassend die folgenden Schritte:
A') Bereitstellen wenigstens einer Wasserquelle,
B') Positionieren wenigstens eines Vliesverbundstoffs nach einer oder mehreren der hierin beschriebenen Ausführungsformen auf eine solche Weise, dass Transport von Wasser von der Wasserquelle durch den Vliesverbundstoff zu der vegetativen Schicht möglich ist.

14. Verfahren nach Anspruch 13, ferner umfassend Schritt C'), der Herstellen wenigstens einer wasserleitenden Verbindung zwischen der Wasserquelle und dem Vliesverbundstoff durch ein weiteres Kapillarmedium umfasst.

15. Verfahren nach Anspruch 13, wobei Bewegung von Wasser in einem Bewässerungssystem, einem Dachbegrünungssystem und/oder einem vertikalen Gartensystem gesteuert wird.

## Revendications

1. Non-tissé composite comprenant au moins une couche A et au moins une couche B, au moins une couche de surface du non-tissé composite étant formée par la couche A, la couche A étant un non-tissé et
a) la couche A comprenant de premières fibres, de préférence de premiers filaments, qui sont de premières fibres composites filées à chaud, de préférence de premiers filaments composites filés à chaud, qui sont fendus au moins dans une certaine mesure pour produire de premières fibres élémentaires, de préférence de premiers filaments élémentaires, ayant un titre moyen de 0,2 dtex maximum, la quantité des premières fibres étant de 10 % en poids à 35 % en poids, rapporté au poids total du non-tissé ;
b) la couche B comprenant
b1) de deuxièmes fibres, de préférence de deuxièmes filaments, ayant un titre moyen de 0,25 à 10 dtex, de préférence 0,25 à 3,5 dtex, la quantité des deuxièmes fibres étant de 65 % en poids à 90 % en poids, rapporté au poids total du non-tissé, ou
b2) une trame tissée comprenant des fils ayant un titre moyen de 500 dtex à 2200 dtex, de préférence de 800 dtex à 2200 dtex, la quantité des fils étant de 20 % en poids à 90 % en poids, de préférence 65 % en poids à 90 % en poids, rapporté au poids total du non-tissé, ou
b3) de deuxièmes fibres, de préférence de deuxièmes filaments, ayant un titre moyen de 0,25 à 10 dtex, et une trame tissée comprenant des fils ayant un titre moyen de 500 dtex à 2200 dtex, la quantité combinée des deuxièmes fibres et des fils étant de 65 % en poids à 90 % en poids, rapporté au poids total du non-tissé.

2. Non-tissé composite selon la revendication 1 dans lequel la quantité des premières fibres est de 15 % en poids à 30 % en poids, mieux encore 20 % en poids à 30 % en poids, rapporté au poids total du non-tissé, et/ou la quantité des deuxièmes fibres est de 70 % en poids à 85 % en poids, mieux encore 70 % en poids à 80 % en poids, rapporté au poids total du non-tissé, et/ou la quantité combinée des deuxièmes fibres et des fils est de 70 % en poids à 85 % en poids, mieux encore 70 % en poids à 80 % en poids, rapporté au poids total du non-tissé.

3. Non-tissé composite selon la revendication 1 ou 2, les deux couches de surface du non-tissé composite étant formées par des couches A.

4. Non-tissé composite selon une ou plusieurs des revendications précédentes, dans lequel les deuxièmes fibres ont un titre moyen de 0,5 à 10 dtex, mieux encore de 1 à 10 dtex.

5. Non-tissé composite selon une ou plusieurs des revendications précédentes, dans lequel les deuxièmes fibres sont des deuxièmes fibres composites filées à chaud avec un degré de séparation de 1% à 10%.

6. Non-tissé composite selon une ou plusieurs des revendications précédentes, dans lequel au moins une couche A et au moins une couche B sont liées l'une à l'autre par hydro-enchevêtrement.

7. Non-tissé composite selon une ou plusieurs des revendications précédentes présentant une capillarité verticale en secondes mesurée conformément à la norme AATCC 197 comme expliqué dans la section des méthodes de mesure de moins de 20 secondes, mieux encore de 4 secondes à 12 secondes, et/ou présentant une capillarité horizontale après 4 heures mesurée comme expliqué dans la section des méthodes de mesure d'au moins 5 cm, de préférence au moins 8 cm, en particulier au moins 10 cm, chacune dans au moins une direction MD et/ou CD, de préférence dans les deux directions.

8. Non-tissé composite selon une ou plusieurs des revendications précédentes possédant une épaisseur mesurée conformément à la norme DIN EN ISO 9073-2:1997-02 de 0,3 mm à 3 mm, de préférence de 0,5 mm à 2 mm.

9. Non-tissé composite selon une ou plusieurs des revendications précédentes, le non-tissé composite étant produit par un procédé comprenant
A) l'obtention d'au moins une couche A comprenant de premières fibres, de préférence de premiers filaments, qui sont de premières fibres composites filées à chaud qui sont séparables au moins dans une certaine mesure pour produire de premières fibres élémentaires ayant un titre moyen de 0,2 dtex maximum, la quantité des premières fibres étant de 10 % en poids à 35 % en poids, rapporté au poids total du non-tissé, la couche A étant un non-tissé ;
B) l'obtention d'au moins une couche B comprenant B1) de deuxièmes fibres, de préférence de deuxièmes filaments, ayant un titre moyen de 0,25 à 10 dtex, de préférence 0,25 à 3,5 dtex, la quantité des deuxièmes fibres étant de 65 % en poids à 90 % en poids, rapporté au poids total du non-tissé ; ou
B2) une trame tissée comprenant des fils, de préférence des filaments ayant un titre moyen de 500 dtex à 2200 dtex, la quantité des fils étant de 20 % en poids à 90 % en poids, de préférence 65 % en poids à 90 % en poids, rapporté au poids total du non-tissé ; ou
B3) de deuxièmes fibres, de préférence de deuxièmes filaments, ayant un titre moyen de 0,25 à 10 dtex, et une trame tissée comprenant des fils, de préférence des filaments, ayant un titre moyen de 500 dtex à 2200 dtex, la quantité combinée des deuxièmes fibres et des fils étant de 65 % en poids à 90 % en poids, rapporté au poids total du non-tissé ;
C) le positionnement des couches A et B l'une au-dessus de l'autre, ce qui permet de former au moins une couche de surface, de préférence les deux, avec la couche A ;
D) le traitement des couches A et B avec des jets de fluide, de préférence des jets d'eau, moyennant quoi au moins les premières fibres sont enchevêtrées et séparées au moins dans une certaine mesure pour produire des fibres élémentaires ayant un titre moyen de 0,2 dtex maximum, ce qui permet d'obtenir un non-tissé composite.

10. Utilisation d'un non-tissé composite selon une ou plusieurs des revendications précédentes comme géotextile capillaire pour contrôler le déplacement d'eau, de préférence depuis une source d'eau jusqu'à une couche végétale.

11. Utilisation selon la revendication 10 dans laquelle l'eau est reçue, retenue, transportée, distribuée et/ou évacuée.

12. Utilisation selon la revendication 10 ou 11, le non-tissé composite étant utilisé comme partie d'un système d'irrigation, d'un système de toiture végétalisée et/ou d'un système de jardin vertical.

13. Procédé de contrôle du déplacement d'eau depuis une source d'eau jusqu'à une couche végétale, comprenant les étapes suivantes :
A') obtention d'au moins une source d'eau,
B') positionnement d'au moins un non-tissé composite selon un ou plusieurs des modes de réalisation tels que décrits dans les présentes de manière à ce que le transport d'eau depuis la source d'eau à travers le non-tissé composite jusqu'à la couche végétale soit possible.

14. Procédé selon la revendication 13, comprenant en outre l'étape C') qui comporte la réalisation d'au moins un branchement d'acheminement d'eau entre la source d'eau et le non-tissé composite par un autre milieu capillaire.

15. Procédé selon la revendication 13 dans lequel le déplacement d'eau dans un système d'irrigation, un système de toiture végétalisée et/ou un système de jardin vertical est contrôlé.
